# EUROPEAN PATENT SPECIFICATION

(11) **EP 1 995 980 B1**
(45) Date of publication and mention of the grant of the patent: **23.01.2013**
(21) Application number: 07720300.8
(22) Date of filing: 02.03.2007
(51) Int. Cl.: H04W 28/20, H04L 5/00, H04B 7/26

(54) **A RELAY SYSTEM AND A METHOD FOR REALIZING BANDWIDTH ASSIGNMENT AND DISPATCH**
RELAISSYSTEM UND VERFAHREN ZUR DURCHFÜHRUNG VON BANDBREITENZUWEISUNG UND -ÜBERTRAGUNG
SYSTÈME DE RELAIS ET PROCÉDÉ DE RÉALISATION D'ATTRIBUTION DE BANDE PASSANTE ET DE TRANSMISSION

(30) Priority: 02.03.2006 CN 200610058618
(43) Date of publication of application: 26.11.2008
(73) Proprietor: Huawei Technologies Co., Ltd., Longgang District, Shenzhen Guangdong 518129 (CN)
(72) Inventor: ZHENG, Ruobin, Guangdong 518129 (CN)
(74) Representative: Kreuz, Georg Maria
(86) International application number: PCT/CN2007/000664
(87) International publication number: WO 2007/098704

(56) References cited:
- EP-A1- 1 183 902
- CN-A- 1 372 740
- CN-A- 1 647 457
- CN-A- 1 941 666
- US-A1- 2005 232 183
- MITSUO NOHARA: "Ad-hoc Meeting Report; Mobile Multi-hop Relay Networking in IEE 802.16" IEEE 802.16 WG CLOSING PLENARY MEETING, [Online] 21 July 2005 (2005-07-21), pages 1-18, XP002548883 Retrieved from the Internet: URL:http://www.ieee802.org/16/docs/05/8021 6-05_051.pdf> [retrieved on 2009-10-06]

## Description

### Field of the Invention

The present invention relates to the field of wireless communication technologies, particularly to broadband wireless access technologies, and more particularly to a relay system and a method for bandwidth allocation and scheduling.

### Background of the Invention

In existing broadband wireless access standards, data is transmitted through a physical channel in a format of frames each including a downlink (DL) subframe and an uplink (UL) subframe. Existing broadband wireless access standards support multiple physical layer specifications, such as Single Carrier (SC), Orthogonal Frequency Division Multiplexing (OFDM), and Orthogonal Frequency Division Multiplexing Access (OFDMA), and support modes of Time Division Duplex (TDD) and Frequency Division Duplex (FDD). In the TDD mode, firstly the downlink subframe is transmitted and then the uplink subframe is transmitted, and a TTG and an RTG are inserted in an alternation of the uplink and downlink subframes so as to spare a period of time for a base station (BS) to finish an alternation of transmission and reception. In the FDD mode, the uplink and downlink subframes are transmitted concurrently at different frequencies, and both a full duplex subscriber station (SS) and a half duplex SS can be supported.

In a TDD system and an FDD system, a downlink subframe includes only one downlink physical layer protocol data unit (DL PHY PDU), and an uplink subframe includes timeslots arranged in an order of a Contention slot for initial ranging, a Contention slot for bandwidth (BW) requests, and one or more uplink physical layer protocol data units (UL PHY PDUs), each of which comes from a different SS.

The DL PHY PDU in the downlink subframe consists of a preamble, a Frame Control Head (FCH), and some data bursts. The preamble is for physical synchronization.

Supporting various categories of services is one of important features of the existing broadband wireless access standards. The supported various categories of services can be The FCH specifies an attribute and a length of the one or more bursts immediately following the FCH, where a downlink_Frame_Prefix (DLFP) in the FCH specifies a profile and a length of the one or more downlink bursts immediately following the FCH, and a downlink mapping (DL-MAP) packet, an uplink mapping (UL_MAP) packet, a downlink channel description (DCD), an uplink channel description (UCD), and other packets descriptive of frame contents are transmitted at the beginning of the first burst (DL Burst #1) immediately following the FCH. If the DL-MAP is transmitted in a current frame, the DL-MAP follows the first Media Access Control (MAC) PDU following the FCH; if the UL-MAP is also transmitted in the current frame, the UL-MAP follows immediately the DL-MAP, or the DLFP in the case of no transmission of the DL-MAP; and if the DCD and the UCD are transmitted in the frame, the DCD and the UCD follow immediately the DL-MAP and the UL-MAP. The DL-MAP and the UL-MAP specify specific control information in the uplink subframe and the downlink subframe. An SS receives and transmits data/management signaling in accordance with the specifications by the DL-MAP and the UL-MAP. Locations and profiles of other bursts in the downlink subframe are specified by a MAP-IE (Information Element) in the DL-MAP, and locations and profiles of respective bursts in the uplink subframe are specified by a MAP-IE in the UL-MAP.

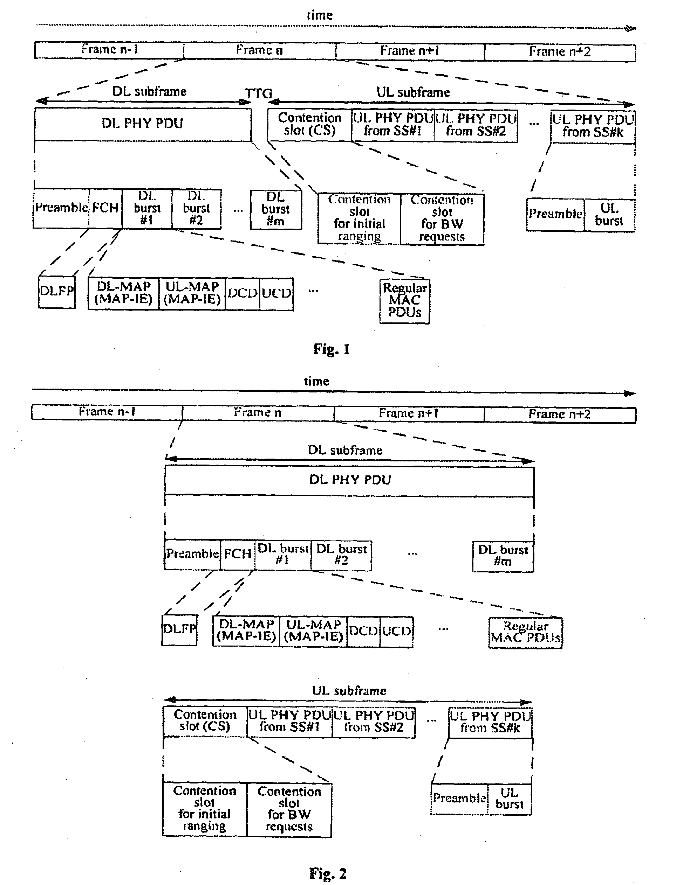

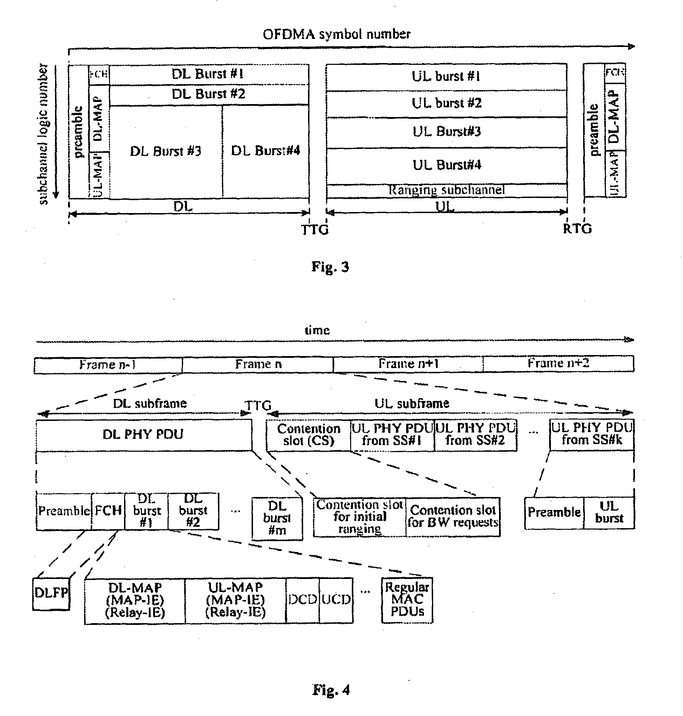

Referring to an OFDM (or SC) frame structure in the TDD mode as illustrated in Figure 1, firstly a downlink subframe is transmitted and then an uplink subframe is transmitted. Referring to an OFDM (or SC) frame structure in the FDD mode as illustrated in Figure 2, an uplink subframe and a downlink subframe are transmitted concurrently at different frequencies, and as for an SS in the half duplex FDD mode, the downlink subframe will not be transmitted when the uplink subframe is being transmitted. Referring to an OFDMA (or SOFDMA) frame structure in the TDD mode as illustrated in Figure 3, a PHY burst in the OFDMA is assigned a set of adjacent subchannels and a set of OFDMA symbols. A burst can be assigned in an uplink to an SS (or a set of SSs) and can be transmitted in a downlink by a BS as a transport unit to an SS. An initial access, periodical ranging, and a bandwidth request of an uplink SS are enabled through a ranging subchannel. In an OFDMA (or SOFDMA) frame structure in the FDD mode, an uplink subframe and a downlink subframe are transmitted at different frequencies.

The existing broadband wireless access standards correspondingly define a physical layer (PHY) and a data link layer (DLL). The data link layer is further divided into a Specific Service Convergence Sublayer (SSCS or CS for short), a MAC Common Part Sublayer (MAC CPS), and a Security Sublayer (SS), where management of bandwidth allocation and scheduling is implemented at the MAC CPS layer.

The bandwidth allocation refers to a procedure in which a BS provides a subordinate SS/ Mobile Subscriber Station (MSS) with a chance of uplink transmission or of a bandwidth request, where after a type and a corresponding QoS parameter of a scheduled service are determined, a scheduler of the BS (QoS Scheduling) can be aware of a throughput and a delay demand for an uplink service, and allocate at an appropriate time a chance of transmitting a bandwidth request or of requesting bandwidth.

The procedure in which the BS provides the SS/MSS with the chance of transmitting a bandwidth request is referred to as polling, which can be categorized into unicast polling and multicast polling. The unicast polling refers to polling a single SS/MSS, i.e. polling respectively each SS/MSS in a set of SS/MSSs. The broadcast/multicast polling refers to polling a set of SS/MSSs, where there is a contention of a timeslot, and there may be a collision upon transmission of packets, with a random retreat being taken into account.

For an uplink, because data transmission from multiple points (SSs/MSSs) to a single point (BS) is supported, a collision may occur, especially in transmission of large data. In order to avoid collisions, a basic mechanism in the BS for a chance of transmission in an uplink channel is that an SS/MSS transmits a bandwidth request (BW Request) for a connection, requesting a resource, the BS allocates an uplink bandwidth through specifying, in a UL-MAP packet, locations and profiles of respective bursts for corresponding connections, and the connection corresponding to the SS/MSS transmits packets at the specified locations of bursts.

For a downlink, data transmission from a single point (BS) to multiple points (SSs/MSSs) is supported. In order to differentiate subscribers in a time-frequency space, a basic mechanism in the BS for transmission in a downlink channel is that the BS performs downlink scheduling through specifying, in a DL-MAP packet, locations and profiles of respective bursts for corresponding connections, and the connections corresponding to an SS/MSS receives packets at the specified locations of bursts.

The service scheduling refers to a procedure in which the MAC layer controls data transmission over a connection CID (Connection Identifier), including a transmission sequence, a transmission frequency, and a volume of data, dependent upon different QoS requirements. A connection CID is a service stream with a QoS requirement. Each connection CID corresponds to a set of QoS parameters as illustrated in Table 1.

**Table 1: QoS Parameters of Different Services**

| | UGS | RTPS | NRTPS | BE |
|---|---|---|---|---|
| Maximum continuous service data rate | √ | √ | √ | √ |
| Minimum reserved service data rate | | √ | √ | |
| Maximum delay | √ | √ | | |
| Tolerable dithering | √ | | | |
| Request transmission strategy | √ | √ | √ | √ |
| Service priority | | | √ | √ |

Supporting various categories of services is one of important features of the existing broadband wireless access standards. The supported various categories of services can be divided into four categories in accordance with data features of the services: an Unsolicited Grant Service (UGS), a Real-time Polling Service (RTPS), a Non-real-time Polling Service (NRTPS), and Best Effort Service (BE). Four corresponding methods for service scheduling are provided: Unsolicited Grant, Real-time Polling, Non-real-time Polling, and Best effort. The methods for service scheduling are different primarily in their bandwidth request transmission methods: except for the Unsolicited Grant service, in the other three categories of services, the uplink bandwidth allocation is subject to a procedure of bandwidth request/allocation.

A concept of a World Interoperability for Microwave Access (WiMAX) Relay Station (RS) has been proposed in the prior art that SS/MSSs, an RS and a BS constitute a Broadband Wireless Access (BWA) relay system, and the RS implements relaying between the BS and the SS/MSSs, thus expanding a coverage of the BS. However, the IEEE 802.16 only defines two types of network elements: SS and BS, and consequently existing methods for bandwidth allocation and bandwidth scheduling between the BS and the SS are not applicable to a bandwidth request of an SS/MSS and bandwidth allocation and scheduling by the BS and the RS in the BWA relay system. Also, the SS in the BWA relay system can not receive and transmit data/management signaling in accordance with the specifications in the original DL-MAP and UL-MAP packets delivered from the BS.

A US Patent with number US 2005/232183A1 has disclosed a system which has one or more relay resources. Such relay resources, properly employed, then serve to effectively increase the quality of service for communications soured by a remote unit that is already within reception range of a base site.

### Summary of the Invention

Embodiments of the present invention provide a relay system and a method for bandwidth allocation and scheduling, for processing a bandwidth request and bandwidth allocation and scheduling in the relay system.

An embodiment of the present invention provides a method for bandwidth allocation and scheduling for a relay system, including:

receiving, by the base station, a bandwidth request initiated by the subscriber station/mobile subscriber station and relayed by the relay station; and

generating, by the base station, a control packet having the information element, transmitting the control packet to the subscriber station/mobile subscriber station, and performing bandwidth allocation and scheduling in accordance with the bandwidth request; wherein the information element specifies locations and profiles of respective bursts in connections corresponding to the subscriber station/mobile subscriber station, the connection being relayed by the relay station..

Another embodiment of the present invention provides a relay system including a base station and a relay station:

the base station includes a bandwidth allocation unit and a base station scheduling management unit;

the bandwidth allocation unit, in accordance with a received bandwidth request transmitted from a subscriber station/mobile subscriber station and relayed by a relay station, allocates an uplink bandwidth and a downlink bandwidth of the base station, and an uplink bandwidth and a downlink bandwidth of a relay station, generates a control packet including an information element, and transmits the control packet to the subscriber station/mobile subscriber station and the relay station;

the base station scheduling management unit schedules the uplink bandwidth and the downlink bandwidth of the base station;

the relay station includes a bandwidth request relay unit and a relay station scheduling management unit;

the bandwidth request relay unit is adapted to relay the bandwidth request initiated by a bandwidth request element of the subscriber station/mobile subscriber station to the base station; and

the relay station scheduling management unit schedules the uplink bandwidth and the downlink bandwidth of the relay station in accordance with the information element in received control packet of a downlink frame in a physical layer frame structure of the base station.

According to the technical solutions provided in the embodiments of the present invention, there are, in the control packets of the downlink subframe of the physical layer frame structure of the base station, the information elements specifying the locations and profiles of respective bursts for the connection corresponding to the subscriber station/mobile subscriber station, relayed by the relay station, and the base station generates the control packets including the information elements in accordance with the bandwidth request initiated by the subscriber station/mobile subscriber station and relayed by the relay system, and transmits the control packets to the subscriber station/mobile subscriber station, thereby performing the bandwidth allocation and scheduling. In this way, the processing method for bandwidth request, bandwidth allocation and service scheduling in the relay system can be implemented. The embodiments of the present invention can realize the multi-hop relay through relaying the bandwidth request, thus reducing the complexity of the BWA relay network and the complexity of the RS.

### Brief Descriptions of the Drawings

Figure 1 illustrates an OFDM (or SC) frame structure in the TDD mode of the prior art;
Figure 2 illustrates an OFDM (or SC) frame structure in the FDD mode of the prior art;
Figure 3 illustrates an OFDMA (or SOFDMA) frame structure in the TDD mode of the prior art;
Figure 4 illustrates an OFDM (or SC) frame structure of a BS in a TDD relay system with extended MAP-IEs according to an embodiment of the present invention;
Figure 5 illustrates an OFDM (or SC) frame structure of a BS in an FDD relay system with extended MAP-IEs according to an embodiment of the present invention;
Figure 6 illustrates an OFDMA frame structure of a BS in a TDD relay system with extended MAP-IEs according to an embodiment of the present invention;
Figure 7 illustrates a reference model for bandwidth allocation and scheduling management by a single-hop BWA relay system according to an embodiment of the present invention;
Figure 8A and Figure 8B illustrate reference models for bandwidth allocation and scheduling management by a multi-hop BWA relay system according to an embodiment of the present invention;
Figure 9 is a flow chart of relaying a bandwidth request according to an embodiment of the present invention;
Figure 10 is a flow chart of a first phase for a bandwidth request at an OFDM physical layer according to an embodiment of the present invention; and
Figure 11 is a flow chart of a first phase for a bandwidth request at an OFDMA physical layer according to an embodiment of the present invention.

### Detailed Descriptions of the Embodiments

Implementations of the present invention are described as follows in detail with reference to the drawings.

In a DL-MAP packet and a UL-MAP packet of a downlink subframe in a physical layer frame structure of a BS, there are added information elements Relay-IEs, including MAP-IEs extended in the DL-MAP packet and the UL-MAP packet.

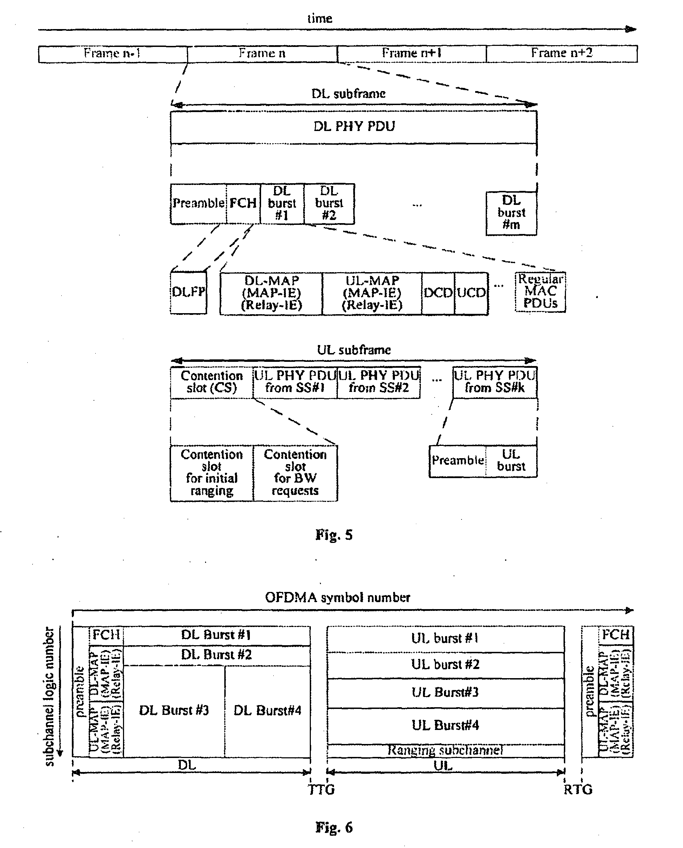

Figure 4 illustrates an OFDM (or SC) frame structure of a BS in a TDD relay system according to an embodiment of the present invention, Figure 5 illustrates an OFDM (or SC) frame structure of a BS in an FDD relay system according to an embodiment of the present invention, and Figure 6 illustrates an OFDMA frame structure of a BS in a TDD relay system according to an embodiment of the present invention. An OFDMA (or SOFDMA) frame structure of a BS in an FDD relay system is identical to that illustrated in Figure 6 except that an uplink subframe and a downlink subframe in the OFDMA (or SOFDMA) frame structure of the BS in the FDD relay system arc transmitted concurrently at different frequencies.

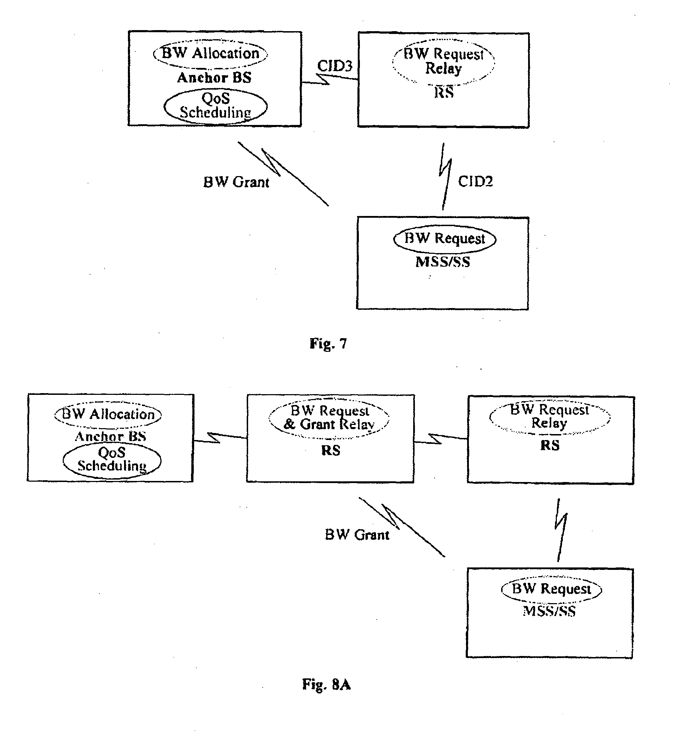

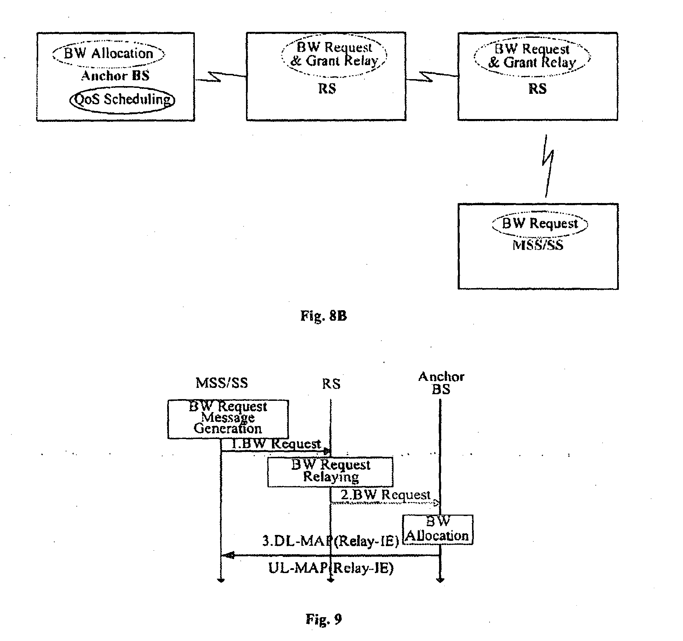

A Relay-IE defines locations and profiles of respective bursts for connections corresponding to an SS/MSS belonging to an RS, and a MAP-IE defines locations and profiles of respective bursts for connections corresponding to an SS/MSS belonging to a BS. The SS/MSS belonging to an RS refers to an SS/MSS for which most communications with a BS except some communications of control signaling must be relayed through a relay station, and the SS/MSS belonging to a BS refers to an SS/MSS that can communicate directly with the BS without relaying by a relay station (not shown in Figure 7, Figure 8A and Figure 8B). Here, specific format and content definitions of a DL-MAP packet and a UL-MAP packet of the Relay-IEs comply with those of a DL-MAP packet and a UL-MAP packet in the existing standards.

Figure 7 illustrates a reference model for bandwidth allocation and scheduling management by a single-hop BWA (e.g. WiMAX) relay system according to an embodiment of the present invention, where the bandwidth allocation is only implemented at an Anchor Base Station (Anchor BS). An RS accesses an SS/MSS to the anchor base station. The RS can also initiate a bandwidth request to the anchor base station. A connection between the RS and the BS is denoted as CID3, and a connection between the MSS/SS and the RS is denoted as CID2.

As illustrated in Figure 7, the SS/MSS, which belongs to the RS, initiates a bandwidth request through the RS, where the bandwidth request initiated by a bandwidth request element (BW Request) of the SS/MSS is transmitted to the RS through the connection CID2. A bandwidth request relay unit (BW Request Relay) of the RS performs relaying of the bandwidth request to the BS through the connection CID3. A bandwidth allocation unit (BW Allocation) of the BS allocates respectively the uplink and downlink bandwidth of the BS and the RS, and generates a DL-MAP packet and a UL-MAP packet of the BS. The BS issues the DL-MAP packet and the UL-MAP packet of the BS directly to the SS/MSS, thereby performing a bandwidth grant (BW Grant), where the Relay-IEs in the DL-MAP packet and the UL-MAP packet of the BS specify locations and profiles of respective bursts for the connections corresponding to the SS/MSS belonging to the RS. The SS/MSS obtains a result of the bandwidth allocation from reception of the Relay-IEs in the DL-MAP packet and the UL-MAP packet of the BS. In accordance with the Relay-IE in the DL-MAP packet of the BS, the connection corresponding to the SS/MSS receives, at the specified locations of bursts, packets transmitted from the RS to the SS/MSS, and in accordance with the Relay-IE in the UL-MAP packet of the BS, the connection corresponding to the SS/MSS transmits, at the specified locations of bursts, packets to the RS.

For a bandwidth grant to an SS/MSS belonging to the BS (not shown in Figure 7), locations and profiles of respective bursts for connections corresponding to the SS/MSS belonging to the BS is specified via MAP-IEs in a DL-MAP packet and a UL-MAP packet delivered from the BS.

In Figure 7, the BS also transmits the DL-MAP packet and the UL-MAP packet of the BS to the RS through the connection CID3 after allocating the uplink and downlink bandwidths of the BS. The RS performs passively the scheduling management on uplink and downlink bandwidths of the RS in accordance with the Relay-IEs in the received DL-MAP packet and UL-MAP packet of the BS. In order to avoid that the DL-MAP packet and the UL-MAP packet of the BS delivered from the BS can not reach the SS/MSS belonging to the RS, the RS performs relaying on the bandwidth grant, and backups the DL-MAP packet and the UL-MAP packet of the BS. The RS copies the received Relay-IEs directly into the DL-MAP packet and the UL-MAP packet of the RS, or the RS converts the received Relay-IEs into the MAP-IEs in the DL-MAP packet and the UL-MAP packet of the RS, and transmits the DL-MAP packet and the UL-MAP packet of the RS to the SS/MSS through the connection CID2.

In a multi-hop BWA relay system, the bandwidth request from the SS/MSS is relayed to the RS through at least one subordinate RS. The relaying of a bandwidth grant in the multi-hop BWA relay system can be accomplished by some or all of the RSs in the system. In a reference model for bandwidth allocation and scheduling management in the multi-hop BWA relay system as illustrated in Figure 8A, in the case that a bandwidth grant is relayed by some of the RSs, the bandwidth grant is relayed by a superior RS, where the superior RS copies received Relay-IEs directly into a DL-MAP packet and a UL-MAP packet of the superior RS, or the superior RS converts the received Relay-IEs into MAP-IEs in the DL-MAP packet and the UL-MAP packet of the superior RS, and transmits the DL-MAP packet and the UL-MAP packet of the superior RS to the SS/MSS through a connection between the superior RS and the SS/MSS. In the case that the bandwidth grant is relayed through all of the RSs in the relay system, a superior RS copies Relay-IEs in received bandwidth grant packets DL-MAP and UL-MAP from the BS directly into a DL-MAP packet and a UL-MAP packet of the superior RS, and then issues the DL-MAP packet and the UL-MAP packet of the superior RS to a subordinate RS, which relays to the SS/MSS the DL-MAP packet and the UL-MAP packet of the superior RS as they are; or the superior RS converts the Relay-IEs in the received bandwidth grant packets DL-MAP and UL-MAP from the BS into MAP-IEs in the DL-MAP packet and the UL-MAP packet of the superior RS, and then issues the DL-MAP packet and the UL-MAP packet of the superior RS to the subordinate RS, which relays to the SS/MSS the DL-MAP packet and the UL-MAP packet of the superior RS as they are.

In a reference model for bandwidth allocation and scheduling management in a multi-hop BWA relay system according to an embodiment of the present invention as illustrated in Figure 8B, a bandwidth grant packet shall be relayed to an SS/MSS through subordinate and superior RSs. Methods for relaying a bandwidth grant packet in Figure 8A and Figure 8B are identical to that in Figure 7.

For an SC, the uplink bandwidth allocation (UL-MAP) is performed in minislots, while for OFDM or OFDMA, the uplink bandwidth allocation (UL-MAP) is performed in symbols and subchannels.

Figure 9 illustrates a flow chart of relaying a bandwidth request in a BWA relay system according to an embodiment of the present invention. As illustrated in Figure 9, in the reference model for bandwidth allocation and scheduling management in Figure 7, Figure 8A or Figure 8B, the bandwidth request and allocation according to the embodiment of the present invention includes the following steps.

Step 1: SS/MSS Initiates Bandwidth Request.

A bandwidth request is a mechanism in which the SS/MSS informs the BS of a required uplink bandwidth. The SS/MSS initiates a bandwidth request through using a Relay-IE designated in a UL-MAP of the BS, which is used by a relay station to broadcast, multicast or unicast a bandwidth request, or a MAP-IE designated in a UL-MAP of the RS, which is used by a relay station to broadcast, multicast or unicast a bandwidth request. Both the Relay-IE designated in a UL-MAP of the BS, which is used by a relay station to broadcast, multicast or unicast a bandwidth request, and the MAP-IE designated in a UL-MAP of the RS, which is used by a relay station to broadcast, multicast or unicast a bandwidth request are descriptive of a time interval and/or a subchannel number of a requested uplink data transmission bandwidth of the uplink of the RS, where the Relay-IE is an information element (IE) newly added in the DL-MAP packet and the UL-MAP packet of the BS, and is an extended MAP-IE. The feature of this IE is dependent upon the type of a CID. In the case of a broadcast or multicast CID, all SS/MSSs will contest for a request, and in the case of a unicast CID, a bandwidth will be requested for each specific connection.

An SS/MSS can transmit a bandwidth request message through the following three methods.

1. The SS/MSS contests for a period of time to transmit a bandwidth request.

The contention for a timeslot generally means broadcast/multicast polling, and a transmitted bandwidth request packet may give rise to a collision. In accordance with definitions in the 802.16 standard, the SS/MSS may select randomly a retreat window upon transmitting a bandwidth request (or an initial ranging request), and transmit the bandwidth request after a timeslot. In other words, if the SS/MSS has not received a bandwidth grant assigned by the BS to the SS/MSS overtime, the SS/MSS may again retreat randomly and transmit the bandwidth request.

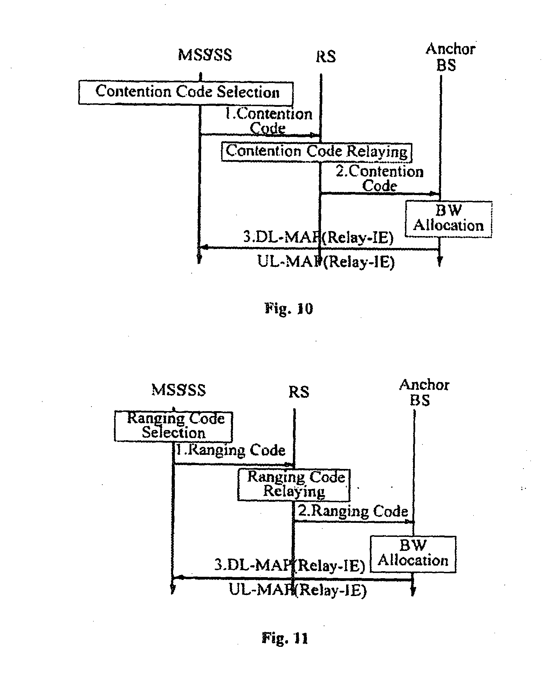

Because mechanisms for transmitting a request in a contention timeslot by different physical layer approaches may vary, OFDM and OFDMA physical layers can respectively support other bandwidth request transmission methods in addition to the method for transmitting a bandwidth request (BW Request) in a contention timeslot. The bandwidth request transmission methods supported by the OFDM and OFDMA physical layers according to embodiments of the invention will be detailed below with reference to Figure 10 and Figure 11.

2. The SS/MSS transmits a bandwidth request through unicast polling assigned by the BS. For realtime polling (rt-Polling) or non-realtime polling (nrt-Polling) of a service stream, the BS can assign a unicast polling slot, and the SS/MS can transmit the request in this slot, thus avoiding a collision.

A specific implementation of the unicast polling is that the BS allocates for a basic CID of the SS/MSS a bandwidth sufficient for transmission of the BW request. Typically, a data grant IE, which is directed to the basic CID of the SS/MSS, is assigned in the UL-MAP. Multicast polling actually defines a bandwidth request contention IE. If a resource overhead for the BS to poll respective SSs separately is excessive, then the multicast polling can be adopted to enable a set of SS/MSSs to transmit BW requests in a contention multicast polling timeslot. A dedicated multicast or broadcast CID can be defined.

For an SS/MSS with an ongoing UGS service stream, a PM bit can be used to inform the BS of that this SS/MSS needs unicast polling for a non-UGS connection. The polling is performed per SS/MSS, while a bandwidth request is processed per connection.

3. The SS/MSS uses a chance of data transmission to transmit an accompanying request (Piggyback), in other words, uses a part of a data packet to transmit a bandwidth request.

A request may have either of the following two attributes:

1. Increment: If the BS receives an increment request, the BS adds a bandwidth requested by the request based upon its current knowledge about a bandwidth demand of the CID.

2. Aggregate: If the BS receives an aggregate request, the BS replaces its current knowledge about a bandwidth demand of the CID with a bandwidth requested by the request.

In the case of using the first and second methods to transmit a bandwidth request, a bandwidth request packet can adopt an individual bandwidth request head, and in the case of using the third method to transmit a bandwidth request, the bandwidth request packet can be represented as optionally accompanying information.

Step 2: The RS performs relaying of the BW request (BW Request Relay), where the bandwidth request may be relayed through multiple RSs (multi-hop RSs).

Performing a conversion of the CID on the bandwidth request packet is required for the relaying of the BW request by the RS. A CID re-mapping table is maintained in the RS, as illustrated in Table 2. In Figure 7, the connection between the RS and the BS is denoted CID3 (Egress CID=0x8b), and the connection between the MSS/SS and the RS is denoted CID2 (Ingress CID=0x3f). The conversion of a CID in the bandwidth request packet from "Ingress CID=0x3f' into "Egress CID=0x8b" is required for the relaying of the BW request by the RS. In other words, in relaying the packet, the RS performs a conversion of the received packet between "Ingress CID" and "Egress CID" in accordance with the CID re-mapping table.

**Table 2: CID Re-mapping Table**

| Serial No. | SFID | Ingress CID | Egress CID | QoS | ... |
|---|---|---|---|---|---|
| 1 | 0x7426 | Ox3f (i.e. CID2) | 0x8b (i.e. CID3) | rt-polling | ... |
| 2 | 0x1694 | 0x49 | 0xa1 | BE | ... |
| 3 | ... | ... | ... | ... | ... |

Step 3: The anchor BS allocates and grants a bandwidth.

After the BS allocates uplink and downlink bandwidths of the BS and the RS, a bandwidth grant is delivered directly from the base station to the SS/MSS. The MAP-IEs in the DL-MAP packet and the UL-MAP packet delivered from the BS specify locations and profiles of respective bursts for connections corresponding to the SS/MSS belonging to the BS, and the Relay-IEs in the DL-MAP packet and the UL-MAP packet delivered from the BS specify locations and profiles of respective bursts for connections corresponding to the SS/MSS belonging to the RS.

Although the SS/MSS may transmit a bandwidth request for a separate CID, the bandwidth grant assigned by the BS always indicates the basic CID. In other words, the transmission of the bandwidth request is CID-based, while the grant for bandwidth allocation always is SS/MSS-based.

Step 4: In the single-hop/multi-hop BWA relay system as illustrated in Figure 7, Figure 8A and Figure 8B, in the case that the relaying of a BW grant by the RS is allowed, the RS performs relaying of the bandwidth grant on the DL-MAP packet and the UL-MAP packet delivered from the BS. In other words, the RS copies the received Replay-IEs directly into the DL-MAP packet and the UL-MAP packet of the RS, or the RS converts the received Replay-IEs into the MAP-IEs in the DL-MAP packet and the UL-MAP packet of the RS, and transmits the DL-MAP packet and the UL-MAP packet of the RS to the SS/MSS through the connection CID2 between the RS and the SS/MSS.

Step 5: From the received Relay-IEs of the DL-MAP packet and the UL-MAP packet in a downlink subframe from the BS or the MAP-IEs of the DL-MAP packet and the UL-MAP packet relayed from the RS, the SS/MSS obtains a result of the bandwidth allocation and grant by the anchor BS, where in accordance with the Relay-IE of the DL-MAP packet in the downlink subframe from the BS or the MAP-IE of the DL-MAP packet relayed from the RS, the connection corresponding to the SS/MSS transmits packets to the RS at specified locations of bursts, and in accordance with the Relay-IE of the UL-MAP packet in the downlink subframe from the BS or the MAP-IE of the UL-MAP packet relayed from the RS, the connection corresponding to the SS/MSS transmits packets to the RS at specified locations of bursts.

As mentioned above, mechanisms for transmitting a bandwidth request in a contention timeslot by different physical layer approaches may vary. Bandwidth request mechanisms supported by the OFDM physical layer and the OFDMA physical layer will be detailed below.

The OFDM physical layer supports two contention-based bandwidth request mechanisms, one of which is that the SS/MSS transmits a BW Request packet in a period of REQ Region-Full of the OFDM physical layer, request for a bandwidth, regarding which the contents of the first method for transmitting a bandwidth request can be referred to.

The other bandwidth request mechanism supported by the OFDM physical layer is that the SS/MSS makes a REQ Region-Focused bandwidth request in a period of REQ Region-Focused of OFDM. The REQ Region-Focused bandwidth request of the OFDM physical layer can be divided into two phases. Figure 10 illustrates a flow chart of a first phase for the REQ Region-Focused bandwidth request of the OFDM physical layer, including the following steps:

Step 1-1: Firstly, the SS/MSS that needs to transmit a bandwidth request selects randomly, in a period of REQ Region-Focused, a chance of uplink transmission to the RS (i.e. a contention channel) for transmitting a contention code.

Step 1-2: The RS selects randomly a chance of uplink transmission to the anchor BS (i.e. a contention channel), and relays to the BS the contention code of the bandwidth request from the SS/MSS as it is. Alternatively, the contention code of the bandwidth request from the SS/MSS can be transmitted to the BS as it is through multi-hop RSs.

Step 1-3: After the BS receives the contention code from the SS/MSS, the anchor BS allocates, for the SS/MSS, uplink bandwidths of the BS and the RS, which are intended for the SS/MSS to transmit the bandwidth request, and transports the allocated uplink bandwidths of the BS and the RS to the RS and the SS/MSS through the DL-MAP packet and the UL-MAP packet, carrying the Relay-IEs, delivered from the BS.

Unlike a conventional method, no basic CID is used to indicate the uplink bandwidth allocation. Instead, both broadcast CID and OFDM Focused_Contention_IE are used together to indicate the uplink bandwidth allocation. OFDM Focused_Contention_IE includes a contention channel, a contention code, and a transmission chance. The SS/MSS can know, from parameters of the contention channel/transmission chance and the contention code as just used by itself, whether the BS has assigned to itself an uplink chance.

Step 1-4: In the case that the single-hop or multi-hop BWA relay system allows the RS to relay a BW grant, the RS relays BW grants for DL-MAP and UL-MAP.

Step 1-5: After receiving the Relay-IE of the UL-MAP packet in the downlink subframe from the BS or the UL-MAP packet in the downlink subframe of the RS relayed from the RS, the SS/MSS can determine whether it has a chance of transmitting the BW Request packet.

A second phase for the REQ Region-Focused bandwidth request of the OFDM physical layer is identical to the procedure of the bandwidth request and allocation illustrated in Figure 9.

The OFDMA physical layer can support a contention-based CDMA bandwidth request mechanism in addition to the mechanism of requesting for a bandwidth by transmitting a BW Request (see the first method for transmitting a bandwidth request).

The OFDMA physical layer defines a ranging subchannel and a set of special pseudorandom ranging codes. The pseudorandom ranging codes can be further divided into three categories of initial ranging, periodic ranging, and bandwidth request. The bandwidth request mechanism of the OFDMA physical layer is divided two phases. Figure 11 illustrates a flow chart of a first phase for the bandwidth request mechanism of the OFDMA physical layer, including the following steps:

Step 2-1: When the SS/MSS needs to request a bandwidth, the SS/MSS selects randomly one among pseudorandom ranging codes of the bandwidth request, and transmits the pseudorandom ranging code of the bandwidth request to the RS through a ranging subchannel of the RS.

Step 2-2: The RS relays to the BS the pseudorandom ranging code of the bandwidth request of the SS/MSS as it is, through a ranging subchannel of the BS (a single hop), or the RS relays the pseudorandom ranging code of the bandwidth request of the SS/MSS as it is to another RS, which in turn relays it to the BS (multi-hop RS relaying).

Step 2-3: After the BS receives the pseudorandom ranging code, the anchor BS allocates, for the SS/MSS, uplink bandwidths of the BS and the RS, which are used for the SS/MSS to transmit a bandwidth request, and transports the allocated uplink bandwidths to the RS and SS/MSS through the DL-MAP packet and the UL-MAP packet carrying the Relay-IEs.

The allocation of the uplink bandwidths of the BS and the RS for the SS/MSS is accomplished through assigning in UL-MAP an information element of CDMA_Allocation_IE carrying information on a transmission area and a ranging code.

Step 2-4: In the case that the single-hop or multi-hop BWA relay system allows the RS to relay a BW grant, the RS relays BW grants for DL-MAP and UL-MAP.

Step 2-5: After receiving the Relay-IE of the UL-MAP packet in the downlink subframe from the BS or the relayed UL-MAP packet in the downlink subframe of the RS, the SS/MSS can determine from the information carried in CDMA_Allocation_IE whether the uplink transmission chance belongs to itself, and if so, the SS/MSS can use such an uplink transmission chance to transmit the bandwidth request and data.

A second phase for the bandwidth request of the OFDMA physical layer is identical to the procedure of the bandwidth request and allocation illustrated in Figure 9.

The embodiments of the present invention provide a relay system and a method for bandwidth allocation and scheduling, which can address a processing method for bandwidth request, bandwidth allocation and service scheduling in the relay system. According to the embodiments of the present invention, the multi-hop relaying can be addressed through relaying a bandwidth request, thus simplifying the complexity of a BWA relay network and reducing the complexity of the RS.

The above embodiments are merely descriptions of the implementations of the present invention without any limitation of the scope of the present invention as defined in the appended claims.

## Claims

1. A method for bandwidth allocation and scheduling for a relay system, comprising:
receiving, by the base station, a bandwidth request initiated by a subscriber station/mobile subscriber station and relayed by a relay station; and
generating, by the base station, a control packet having an information element, transmitting the control packet to the subscriber station/mobile subscriber station through the relay station, and performing bandwidth allocation and scheduling in accordance with the bandwidth request; wherein the information element specifies locations and profiles of respective bursts in connections corresponding to the subscriber station/mobile subscriber station, the connection being relayed by the relay station.

2. The method according to claim 1, further comprising:
adding, into the control packet of a downlink subframe in a physical layer frame structure of the base station, the information element specifying locations and profiles of respective bursts in connections corresponding to the subscriber station/mobile subscriber station, the connection being relayed by the relay station.

3. The method according to claim 1 or 2, wherein the performing of bandwidth allocation and scheduling by the base station in accordance with the bandwidth request comprises:
allocating, by the base station, an uplink bandwidth and a downlink bandwidth of the base station, and an uplink bandwidth and a downlink bandwidth of the relay station, respectively, and scheduling the uplink bandwidth and the downlink bandwidth of the base station, in accordance with the bandwidth request of the subscriber station/mobile subscriber station.

4. The method according to claim 1 or 2, further comprising:
scheduling, by the relay station, the uplink bandwidth and the downlink bandwidth of the relay station in accordance with the information element in the control packet after receiving the control packet having the information element transmitted from the base station, when the base station transmits the control packet to the subscriber station/mobile subscriber station through the relay station.

5. The method according to claim 4, further comprising:
copying, by the relay station, the information element in the received control packet into the control packet of the relay station, and transmitting the control packet of the relay station to the subscriber station/mobile subscriber station; or
converting, by the relay station, the information element in the received control packet into a mapping information element in the control packet of the relay station, and transmitting the control packet of the relay station to the subscriber station/mobile subscriber station.

6. The method according to claim 1 or 2, wherein before the subscriber station/mobile subscriber station initiates the bandwidth request, the requesting a bandwidth by the subscriber station/mobile subscriber station from the base station comprises:
selecting, by the subscriber station/mobile subscriber station, a relay station contention channel, and transmitting a contention code;
selecting, by the relay station, a base station contention channel, and relaying the contention code of the bandwidth request of the subscriber station/mobile subscriber station to the base station; and
allocating, by the base station, to the subscriber station/mobile subscriber station an uplink bandwidth of the base station and an uplink bandwidth of the relay station for the subscriber station/mobile subscriber station to transmit the bandwidth request, in accordance with the received contention code of the subscriber station/mobile subscriber station.

7. The method according to claim 1 or 2, wherein before the subscriber station/mobile subscriber station initiates the bandwidth request, the requesting a bandwidth by the subscriber station/mobile subscriber station from the base station further comprises:
selecting randomly, by the subscriber station/mobile subscriber station, a pseudorandom ranging code among pseudorandom ranging codes of the bandwidth request, and transmitting the pseudorandom ranging code of the bandwidth request to the relay station through a ranging subchannel of the relay station;
relaying, by the relay station, the pseudorandom ranging code of the bandwidth request of the subscriber station/mobile subscriber station to the base station through a ranging subchannel of the base station;
allocating, by the base station, to the subscriber station/mobile subscriber station an uplink bandwidth of the base station and an uplink bandwidth of the relay station for transmitting the bandwidth request, after receiving the pseudorandom ranging code of the subscriber station/mobile subscriber station; and
transmitting, by the base station, to the subscriber station/mobile subscriber station and the relay station the uplink bandwidth of the base station and the uplink bandwidth of the relay station allocated to the subscriber station/mobile subscriber station, through transmitting the control packet with the new information element.

8. The method according to claim 1 or 2, further comprising:
transmitting, by the subscriber station/mobile subscriber station, the bandwidth request to the relay station through at least one subordinate relay station;
issuing, by the relay station, to the subordinate relay station, the relay station's control packet with the copied, information element; and
relaying, by the subordinate relay station, to the subscriber station/mobile subscriber station, the control packet of the relay station as it is; or
converting, by the relay station, the information element in the received control packet of the base station into a mapping information element in control packet of the relay station; transmitting the converted control packet of the relay station to the subordinate relay station; and relaying, by the subordinate relay station, to the subscriber station/mobile subscriber station, the received control packet of the relay station as it is.

9. The method according to claim 2, wherein the control packet of the downlink subframe of the physical layer frame structure of the base station comprises a downlink mapping information element packet and an uplink mapping information element packet.

10. The method according to any one of claims 1, 4 and 5, wherein the information element is an extended mapping information element in the downlink mapping information element packet and the uplink mapping information element packet.

11. The method according to claim 1 or 2, wherein the initiating of the bandwidth request by the subscriber station/mobile subscriber station comprises:
initiating, by the subscriber station/mobile subscriber station, the bandwidth request through using an information element designated in an uplink mapping information element packet of the base station and used for a bandwidth request for broadcast, multicast or unicast of relay station; or
initiating, by the subscriber station/mobile subscriber station, the bandwidth request, through using an mapping information element designated in an uplink mapping information element packet of the relay station and used for a bandwidth request for broadcast, multicast or unicast of the relay station, wherein:
the information element is designated in the uplink mapping information element packet of the base station and used for a bandwidth request for broadcast, multicast or unicast of relay station, and the mapping information element is designated in the uplink mapping information element packet of the relay station and used for a bandwidth request for broadcast, multicast or unicast of the relay station.

12. A relay system, comprising a base station and a relay station, wherein:
the base station comprises a bandwidth allocation unit and a base station scheduling management unit;
the bandwidth allocation unit, in accordance with a received bandwidth request transmitted from a subscriber station/mobile subscriber station and relayed by a relay station, is adapted to allocate an uplink bandwidth and a downlink bandwidth of the base station, and an uplink bandwidth and a downlink bandwidth of a relay station, is adapted to generate a control packet including an information element, and is adapted to transmit the control packet to the subscriber station/mobile subscriber station and the relay station;
the base station scheduling management unit is adapted to schedule the uplink bandwidth and the downlink bandwidth of the base station;
the relay station comprises a bandwidth request relay unit and a relay station scheduling management unit;
the bandwidth request relay unit is adapted to relay the bandwidth request initiated by a bandwidth request element of the subscriber station/mobile subscriber station to the base station; and
the relay station scheduling management unit is adapted to schedule the uplink bandwidth and the downlink bandwidth of the relay station in accordance with the information element in received control packet of a downlink subframe in a physical layer frame structure of the base station.

13. The relay system according to claim 12, wherein the relay station further comprises a bandwidth grant relay unit, wherein
the bandwidth grant relay unit is adapted to copy the received information element into a control packet of the relay station, and is adapted to transmit to the subscriber station/mobile subscriber station the relay station's control packet with the copied information element, or
the bandwidth grant relay unit is adapted to convert the received information element into a mapping information element in control packet of the relay station, and is adapted to transmit the converted control packet of the relay station to the subscriber station/mobile subscriber station.

14. The relay system according to claim 13, further comprising at least one subordinate relay station having a bandwidth request relay unit for relaying the bandwidth request initiated by the subscriber station/mobile subscriber station to the relay station.

15. The relay system according to claim 14, wherein the subordinate relay station further comprises a bandwidth grant relay unit, which is adapted to relay to the subscriber station/mobile subscriber station the control packet of the relay station, delivered from the relay station to the subordinate relay station.

16. The relay system according to claim 14 or 15, wherein the control packet of the downlink subframe of the physical layer frame structure of the base station comprises a downlink mapping information element packet and an uplink mapping information element packet.

17. The relay system according to claim 16, wherein the information element is an extended mapping information element in the downlink mapping information element packet and the uplink mapping information element packet, the extended mapping information element is used to specify locations and profiles of respective bursts in connections corresponding to the subscriber station/mobile subscriber station, relayed by the relay station.

## Patentansprüche

1. Verfahren zur Bandbreitenzuweisung und -zeitplanung für ein Relaissystem, das Folgendes umfasst:
Empfangen einer von einer Teilnehmerstation/mobilen Teilnehmerstation initiierten und von einer Relaisstation übermittelten Bandbreitenanforderung durch die Basisstation; und
Generieren eines Steuerpakets mit einem Informationselement durch die Basisstation, Übertragen des Steuerpakets zu der Teilnehmerstation/mobilen Teilnehmerstation durch die Relaisstation und Durchführen einer Bandbreitenzuweisung und -zeitplanung gemäß der Bandbreitenanforderung; wobei das Informationselement Orte und Profile jeweiliger Bursts in Verbindungen entsprechend der Teilnehmerstation/mobilen Teilnehmerstation spezifiziert, wobei die Verbindung durch die Relaisstation übermittelt wird.

2. Verfahren nach Anspruch 1, weiterhin umfassend:
Zufügen des Orte und Profile von jeweiligen Bursts in Verbindungen entsprechend der Teilnehmerstation/mobilen Teilnehmerstation spezifizierenden Informationselements in das Steuerpaket eines Downlink-Unterrahmens in einer Physical Layer Frame-Struktur der Basisstation, wobei die Verbindung durch die Relaisstation übermittelt wird.

3. Verfahren nach Anspruch 1 oder 2, wobei das Durchführen der Bandbreitenzuweisung und -zeitplanung durch die Basisstation gemäß der Bandbreitenanforderung Folgendes umfasst:
Zuweisen einer Uplink-Bandbreite und einer Downlink-Bandbreite der Basisstation beziehungsweise einer Uplink-Bandbreite und einer Downlink-Bandbreite der Relaisstation durch die Basisstation und zeitliches Planen der Uplink-Bandbreite und der Downlink-Bandbreite der Basisstation gemäß der Bandbreitenanforderung der Teilnehmerstation/mobilen Teilnehmerstation.

4. Verfahren nach Anspruch 1 oder 2, weiterhin umfassend:
zeitliches Planen der Uplink-Bandbreite und der Downlink-Bandbreite der Relaisstation durch die Relaisstation gemäß dem Informationselement in dem Steuerpaket nach dem Empfangen des von der Basisstation übertragenen Steuerpakets mit dem Informationselement, wenn die Basisstation das Steuerpaket durch die Relaisstation zu der Teilnehmerstation/mobilen Teilnehmerstation überträgt.

5. Verfahren nach Anspruch 4, weiterhin umfassend:
Kopieren des Informationselements in dem empfangenen Steuerpaket in das Steuerpaket der Relaisstation durch die Relaisstation und Übertragen des Steuerpakets der Relaisstation zu der Teilnehmerstation/mobilen Teilnehmerstation; oder
Umwandeln des Informationselements in dem empfangenen Steuerpaket durch die Relaisstation in ein Abbildungsinformationselement in dem Steuerpaket der Relaisstation und Übertragen des Steuerpakets der Relaisstation zu der Teilnehmerstation/mobilen Teilnehmerstation.

6. Verfahren nach Anspruch 1 oder 2, wobei, bevor die Teilnehmerstation/mobile Teilnehmerstation die Bandbreitenanforderung initiiert, das Anfordern einer Bandbreite durch die Teilnehmerstation/mobile Teilnehmerstation von der Basisstation Folgendes umfasst:
Wählen eines Relaisstationskonfliktkanals durch die Teilnehmerstation/mobile Teilnehmerstation und Übertragen eines Konfliktcodes;
Wählen eines Basisstationskonfliktkanals durch die Relaisstation und Übermitteln des Konfliktcodes der Bandbreitenanforderung der Teilnehmerstation/mobilen Teilnehmerstation an die Basisstation; und
Zuweisen, durch die Basisstation, zu der Teilnehmerstation/mobilen Teilnehmerstation einer Uplink-Bandbreite der Basisstation und einer Uplink-Bandbreite der Relaisstation für die Teilnehmerstation/mobile Teilnehmerstation zum Übertragen der Bandbreitenanforderung gemäß dem empfangenen Konfliktcode der Teilnehmerstation/mobilen Teilnehmerstation.

7. Verfahren nach Anspruch 1 oder 2, wobei, bevor die Teilnehmerstation/mobile Teilnehmerstation die Bandbreitenanforderung initiiert, das Anfordern einer Bandbreite durch die Teilnehmerstation/mobile Teilnehmerstation von der Basisstation Folgendes umfasst:
zufälliges Wählen eines Ranging-Pseudozufallscodes unter den Ranging-Pseudozufallscodes der Bandbreitenanforderung durch die Teilnehmerstation/mobile Teilnehmerstation und Übertragen des Ranging-Pseudozufallscodes der Bandbreitenanforderung zu der Relaisstation durch einen Ranging-Teilkanal der Relaisstation;
Übermitteln des Ranging-Pseudozufallscodes der Bandbreitenanforderung der Teilnehmerstation/mobilen Teilnehmerstation durch die Relaisstation zu der Basisstation durch einen Ranging-Teilkanal der Basisstation;
Zuweisen, durch die Basisstation, zu der Teilnehmerstation/mobilen Teilnehmerstation einer Uplink-Bandbreite der Basisstation und einer Uplink-Bandbreite der Relaisstation zum Übertragen der Bandbreitenanforderung nach dem Empfangen des Ranging-Pseudozufallscodes der Teilnehmerstation/mobilen Teilnehmerstation; und
Übertragen der Uplink-Bandbreite der Basisstation und der Uplink-Bandbreite der Relaisstation, der Teilnehmerstation/mobilen Teilnehmerstation zugewiesen, durch die Basisstation zu der Teilnehmerstation/mobilen Teilnehmerstation und der Relaisstation durch Übertragen des Steuerpakets mit dem neuen Informationselement.

8. Verfahren nach Anspruch 1 oder 2, weiterhin umfassend:
Übertragen der Bandbreitenanforderung durch die Teilnehmerstation/mobile Teilnehmerstation zu der Relaisstation durch mindestens eine untergeordnete Relaisstation;
Ausgeben des Steuerpakets der Relaisstation mit dem kopierten Informationselement durch die Relaisstation an die untergeordnete Relaisstation; und
Übermitteln des Steuerpakets der Relaisstation, wie es ist, durch die untergeordnete Relaisstation an die Teilnehmerstation/mobile Teilnehmerstation; oder
Umwandeln des Informationselements in dem empfangenen Steuerpaket der Basisstation durch die Relaisstation in ein Abbildungsinformationselement im Steuerpaket der Relaisstation; Übertragen des umgewandelten Steuerpakets der Relaisstation zu der untergeordneten Relaisstation und Übermitteln des empfangenen Steuerpakets der Relaisstation, wie es ist, durch die untergeordnete Relaisstation zu der Teilnehmerstation/mobilen Teilnehmerstation.

9. Verfahren nach Anspruch 2, wobei das Steuerpaket des Downlink-Unterrahmens der Physical Layer Frame-Struktur der Basisstation ein Downlink-Abbildungsinformationselementpaket und ein Uplink-Abbildungsinformationselementpaket umfasst.

10. Verfahren nach einem der Ansprüche 1, 4 und 5, wobei das Informationselement ein erweitertes Abbildungsinformationselement in dem Downlink-Abbildungsinformationselementpaket und dem Uplink-Abbildungsinformationselementpaket ist.

11. Verfahren nach Anspruch 1 oder 2, wobei das Initiieren der Bandbreitenanforderung durch die Teilnehmerstation/mobile Teilnehmerstation Folgendes umfasst:
Initiieren, durch die Teilnehmerstation/mobile Teilnehmerstation, der Bandbreitenanforderung durch Verwenden eines Informationselements, in einem Uplink-Abbildungsinformationselementpaket der Basisstation bezeichnet und verwendet für eine Bandbreitenanforderung für das Broadcasten, Multicasten oder Unicasten der Relaisstation; oder
Initiieren, durch die Teilnehmerstation/mobile Teilnehmerstation, der Bandbreitenanforderung durch Verwenden eines Abbildungsinformationselements, in einem Uplink-Abbildungsinformationselementpaket der Relaisstation bezeichnet und für eine Bandbreitenanforderung für das Broadcasten, Multicasten oder Unicasten der Relaisstation verwendet, wobei:
das Informationselement in dem Uplink-Abbildungsinformationselementpaket der Basisstation bezeichnet ist und für eine Bandbreitenanforderung für das Broadcasten, Multicasten oder Unicasten der Relaisstation verwendet wird und das Abbildungsinformationselement in dem Uplink-Abbildungsinformationselementpaket der Relaisstation bezeichnet ist und für eine Bandbreitenanforderung für das Broadcasten, Multicasten oder Unicasten der Relaisstation verwendet wird.

12. Relaissystem, umfassend eine Basisstation und eine Relaisstation, wobei:
die Basisstation eine Bandbreitenzuweisungseinheit und eine Basisstationszeitplanungsmanagementeinheit umfasst;
die Bandbreitenzuweisungseinheit gemäß einer von einer Teilnehmerstation/mobilen Teilnehmerstation übertragenen und von einer Relaisstation übermittelten empfangenen Bandbreitenanforderung ausgelegt ist zum Zuweisen einer Uplink-Bandbreite und einer Downlink-Bandbreite der Basisstation und eine Uplink-Bandbreite und eine Downlink-Bandbreite einer Relaisstation ausgelegt ist zum Generieren eines Steuerpakets mit einem Informationselement und ausgelegt ist zum Übertragen des Steuerpakets zu der Teilnehmerstation/mobilen Teilnehmerstation und der Relaisstation;
die Basisstationszeitplanungsmanagementeinheit ausgelegt ist zum zeitlichen Planen der Uplink-Bandbreite und der Downlink-Bandbreite der Basisstation;
die Relaisstation eine Bandbreitenanforderungsrelaiseinheit und eine Relaisstationszeitplanungsmanagementeinheit umfasst;
die Bandbreitenanforderungsrelaiseinheit ausgelegt ist zum Übermitteln der von einem Bandbreitenanforderungselement der Teilnehmerstation/mobilen Teilnehmerstation initiierten Bandbreitenanforderung an die Basisstation und
die Relaisstationszeitplanungsmanagementeinheit ausgelegt ist zum zeitlichen Planen der Uplink-Bandbreite und der Downlink-Bandbreite der Relaisstation gemäß dem Informationselement in einem empfangenen Steuerpaket eines Downlink-Unterrahmens in einer Physical Layer Frame-Struktur der Basisstation.

13. Relaissystem nach Anspruch 12, wobei die Relaisstation weiterhin eine Bandbreitengewährungsrelaiseinheit umfasst, wobei die Bandbreitengewährungsrelaiseinheit ausgelegt ist zum Kopieren des empfangenen Informationselements in ein Steuerpaket der Relaisstation und ausgelegt ist zum Übertragen des Steuerpakets der Relaisstation mit dem kopierten Informationselement zu der Teilnehmerstation/mobilen Teilnehmerstation, oder
die Bandbreitengewährungsrelaiseinheit ausgelegt ist zum Umwandeln des empfangenen Informationselements in ein Abbildungsinformationselement im Steuerpaket der Relaisstation und ausgelegt ist zum Übertragen des umgewandelten Steuerpakets der Relaisstation zu der Teilnehmerstation/mobilen Teilnehmerstation.

14. Relaissystem nach Anspruch 13, weiterhin umfassend mindestens eine untergeordnete Relaisstation mit einer Bandbreitenanforderungsrelaiseinheit zum Übermitteln der von der Teilnehmerstation/mobilen Teilnehmerstation initiierten Bandbreitenanforderung an die Relaisstation.

15. Relaissystem nach Anspruch 14, wobei die untergeordnete Relaisstation weiterhin eine Bandbreitengewährungsrelaiseinheit umfasst, die ausgelegt ist zum Übermitteln des Steuerpakets der Relaisstation, von der Relaisstation an die untergeordnete Relaisstation geliefert, zu der Teilnehmerstation/mobilen Teilnehmerstation.

16. Relaissystem nach Anspruch 14 oder 15, wobei das Steuerpaket des Downlink-Unterrahmens der Physical Layer Frame-Struktur der Basisstation ein Downlink-Abbildungsinformationselementpaket und ein Uplink-Abbildungsinformationselementpaket umfasst.

17. Relaissystem nach Anspruch 16, wobei das Informationselement ein erweitertes Abbildungsinformationselement in dem Downlink-Abbildungsinformationselementpaket und dem Uplink-Abbildungsinformationselementpaket ist, wobei das erweiterte Abbildungsinformationselement verwendet wird zum Spezifizieren von Orten und Profilen von jeweiligen Bursts in Verbindungen entsprechend der Teilnehmerstation/mobilen Teilnehmerstation, von der Relaisstation übermittelt.

## Revendications

1. Procédé d'attribution et d'ordonnancement de largeur de bande d'un système relais, comprenant :
la réception, par la station de base, d'une requête de largeur de bande lancée par une station d'abonné/station d'abonné mobile et relayée par une station relais ; et
la génération, par la station de base, d'un paquet de commande ayant un élément d'information, la transmission du paquet de commande à la station d'abonné/station d'abonné mobile par le biais de la station relais, et l'exécution de l'attribution et de l'ordonnancement de largeur de bande en fonction de la requête de largeur de bande ;
dans lequel l'élément d'information spécifie des emplacements et profils de salves respectives dans des connexions correspondant à la station d'abonné/station d'abonné mobile, la connexion étant relayée par la station relais.

2. Procédé selon la revendication 1, comprenant en outre :
l'ajout, dans le paquet de commande d'une sous-trame de liaison descendante dans une structure de trame de couche physique de la station de base, de l'élément d'information spécifiant des emplacements et profils de salves respectives dans des connexions correspondant à la station d'abonné/station d'abonné mobile, la connexion étant relayée par la station relais.

3. Procédé selon la revendication 1 ou 2, dans lequel l'exécution de l'attribution et de l'ordonnancement de largeur de bande par la station de base en fonction de la requête de largeur de bande comprend :
l'attribution, par la station de base, d'une largeur de bande de liaison montante et d'une largeur de bande de liaison descendante de la station de base, et d'une largeur de bande de liaison montante et d'une largeur de bande de liaison descendante de la station relais, respectivement, et l'ordonnancement de la largeur de bande de liaison montante et de la largeur de bande de liaison descendante de la station de base, conformément à la requête de largeur de bande de la station d'abonné/station d'abonné mobile.

4. Procédé selon la revendication 1 ou 2, comprenant en outre :
l'ordonnancement, par la station relais, de la largeur de bande de liaison montante et de la largeur de bande de liaison descendante de la station relais en fonction de l'élément d'information dans le paquet de commande après la réception du paquet de commande possédant l'élément d'information transmis par la station de base, quand la station de base transmet le paquet de commande à la station d'abonné/station d'abonné mobile par le biais de la station relais.

5. Procédé selon la revendication 4, comprenant en outre :
la copie, par la station relais, de l'élément d'information dans le paquet de commande reçu dans le paquet de commande de la station relais, et la transmission du paquet de commande de la station relais à la station d'abonné/station d'abonné mobile ; ou
la conversion, par la station relais, de l'élément d'information dans le paquet de commande reçu en un élément d'information de mappage dans le paquet de commande de la station relais, et la transmission du paquet de commande de la station relais à la station d'abonné/station d'abonné mobile.

6. Procédé selon la revendication 1 ou 2, dans lequel avant que la station d'abonné/station d'abonné mobile lance la requête de largeur de bande, la requête d'une largeur de bande par la station d'abonné/station d'abonné mobile auprès de la station de base comprend :
la sélection, par la station d'abonné/station d'abonné mobile, d'un canal de résolution de collision de station relais et la transmission d'un code de résolution de collision ;
la sélection, par la station relais, d'un canal de résolution de collision de station de base et le relais du code de résolution de collision de la requête de largeur de bande de la station d'abonné/station d'abonné mobile jusqu'à la station de base ; et
l'attribution, par la station de base, à la station d'abonné/station d'abonné mobile d'une largeur de bande de liaison montante de la station de base et d'une largeur de bande de liaison montante de la station relais pour que la station d'abonné/station d'abonné mobile puisse transmettre la requête de largeur de bande, en fonction du code de résolution de collision reçu de la station d'abonné/station d'abonné mobile.

7. Procédé selon la revendication 1 ou 2, dans lequel avant que la station d'abonné/station d'abonné mobile lance la requête de largeur de bande, la requête d'une largeur de bande par la station d'abonné/station d'abonné mobile auprès de la station de base comprend en outre :
la sélection aléatoire, par la station d'abonné/station d'abonné mobile, d'un code de distance pseudo-aléatoire parmi des codes de distance pseudo-aléatoires de la requête de largeur de bande, et la transmission du code de distance pseudo-aléatoire de la requête de largeur de bande à la station relais par le biais d'un sous-canal de distance de la station relais ;
le relais, par la station relais, du code de distance pseudo-aléatoire de la requête de largeur de bande de la station d'abonné/station d'abonné mobile jusqu'à la station de base par le biais d'un sous-canal de distance de la station de base ;
l'attribution, par la station de base, à la station d'abonné/station d'abonné mobile d'une largeur de bande de liaison montante de la station de base et d'une largeur de bande de liaison montante de la station relais pour lui permettre de transmettre la requête de largeur de bande, après la réception du code de distance pseudo-aléatoire de la station d'abonné/station d'abonné mobile ; et
la transmission, par la station de base, à la station d'abonné/station d'abonné mobile et à la station relais de la largeur de bande de liaison montante de la station de base et de la largeur de bande de liaison montante de la station relais attribuées à la station d'abonné/station d'abonné mobile, par la transmission du paquet de commande comportant le nouvel élément d'information.

8. Procédé selon la revendication 1 ou 2, comprenant en outre :
la transmission, par la station d'abonné/station d'abonné mobile, de la requête de largeur de bande à la station relais par le biais d'au moins une station relais subordonnée ;
la délivrance, par la station relais, à la station relais subordonnée, du paquet de commande de la station relais comportant l'élément d'information copié ; et
le relais, par la station relais subordonnée, jusqu'à la station d'abonné/station d'abonné mobile, du paquet de commande de la station relais tel quel ; ou
la conversion, par la station relais, de l'élément d'information dans le paquet de commande reçu de la station de base en un élément d'information de mappage dans le paquet de commande de la station relais ; la transmission du paquet de commande converti de la station relais à la station relais subordonnée ; et le relais, par la station relais subordonnée, jusqu'à la station d'abonné/station d'abonné mobile, du paquet de commande reçu de la station relais tel quel.

9. Procédé selon la revendication 2, dans lequel le paquet de commande de la sous-trame de liaison descendante de la structure de trame de couche physique de la station de base comprend un paquet d'élément d'information de mappage de liaison descendante et un paquet d'élément d'information de mappage de liaison montante.

10. Procédé selon l'une quelconque des revendications 1, 4 et 5, dans lequel l'élément d'information est un élément d'information de mappage étendu dans le paquet d'élément d'information de mappage de liaison descendante et le paquet d'élément d'information de mappage de liaison montante.

11. Procédé selon la revendication 1 ou 2, dans lequel le lancement de la requête de largeur de bande par la station d'abonné/station d'abonné mobile comprend :
le lancement, par la station d'abonné/station d'abonné mobile, de la requête de largeur de bande en utilisant un élément d'information désigné dans un paquet d'élément d'information de mappage de liaison montante de la station de base et utilisé pour une requête de largeur de bande pour la diffusion, la multidiffusion ou l'unidiffusion de la station relais ; ou
le lancement, par la station d'abonné/station d'abonné mobile, de la requête de largeur de bande en utilisant un élément d'information de mappage désigné dans un paquet d'élément d'information de mappage de liaison montante de la station relais et utilisé pour une requête de largeur de bande pour la diffusion, la multidiffusion ou l'unidiffusion de la station relais, dans lequel :
l'élément d'information est désigné dans le paquet d'élément d'information de mappage de liaison montante de la station de base et utilisé pour une requête de largeur de bande pour la diffusion, la multidiffusion ou l'unidiffusion de la station relais, et l'élément d'information de mappage est désigné dans le paquet d'élément d'information de mappage de liaison montante de la station relais et utilisé pour une requête de largeur de bande pour la diffusion, la multidiffusion, ou l'unidiffusion de la station relais.

12. Système de relais, comprenant une station de base et une station relais, dans lequel :
la station de base comprend une unité d'attribution de largeur de bande et une unité de gestion d'ordonnancement de station de base ;
l'unité d'attribution de largeur de bande, en fonction d'une requête de largeur de bande reçue transmise par une station d'abonné/station d'abonné mobile et relayée par une station relais, est adaptée pour attribuer une largeur de bande de liaison montante et une largeur de bande de liaison descendante de la station de base, et une largeur de bande de liaison montante et une largeur de bande de liaison descendante d'une station relais, est adaptée pour générer un paquet de commande comportant un élément d'information, et est adaptée pour transmettre le paquet de commande à la station d'abonné/station d'abonné mobile et à la station relais ;
l'unité de gestion d'ordonnancement de station de base est adaptée pour ordonnancer la largeur de bande de liaison montante et la largeur de bande de liaison descendante de la station de base ;
la station relais comprend une unité de relais de requête de largeur de bande et une unité de gestion d'ordonnancement de station relais ;
l'unité de relais de requête de largeur de bande est adaptée pour relayer la requête de largeur de bande lancée par un élément de requête de largeur de bande de la station d'abonné/station d'abonné mobile jusqu'à la station de base ; et
l'unité de gestion d'ordonnancement de station relais est adaptée pour ordonnancer la largeur de bande de liaison montante et la largeur de bande de liaison descendante de la station relais en fonction de l'élément d'information dans le paquet de commande reçu d'une sous-trame de liaison descendante dans une structure de trame de couche physique de la station de base.

13. Système de relais selon la revendication 12, dans lequel la station relais comprend en outre une unité de relais de cession de largeur de bande, dans laquelle
l'unité de relais de cession de largeur de bande est adaptée pour copier l'élément d'information reçu dans un paquet de commande de la station relais, et est adaptée pour transmettre à la station d'abonné/station d'abonné mobile le paquet de commande de la station relais avec l'élément d'information copié ; ou
l'unité de relais de cession de largeur de bande est adaptée pour convertir l'élément d'information reçu en un élément d'information de mappage dans le paquet de commande de la station relais, et est adaptée pour transmettre le paquet de commande converti de la station relais à la station d'abonné/station d'abonné mobile.

14. Système de relais selon la revendication 13, comprenant en outre au moins une station relais subordonnée ayant une unité de relais de requête de largeur de bande pour relayer la requête de largeur de bande lancée par la station d'abonné/station d'abonné mobile jusqu'à la station relais.

15. Système de relais selon la revendication 14, dans lequel la station relais subordonnée comprend en outre une unité de relais de cession de largeur de bande, laquelle est adaptée pour relayer jusqu'à la station d'abonné/station d'abonné mobile le paquet de commande de la station relais, délivré par la station relais à la station relais subordonnée.

16. Système de relais selon la revendication 14 ou 15, dans lequel le paquet de commande de la sous-trame de liaison descendante de la structure de trame de couche physique de la station de base comprend un paquet d'élément d'information de mappage de liaison descendante et un paquet d'élément d'information de mappage de liaison montante.

17. Système de relais selon la revendication 16, dans lequel l'élément d'information est un élément d'information de mappage étendu dans le paquet d'élément d'information de mappage de liaison descendante et le paquet d'élément d'information de mappage de liaison montante, l'élément d'information de mappage étendu étant utilisé pour spécifier des emplacements et profils de salves respectives dans des connexions correspondant à la station d'abonné/station d'abonné mobile, relayées par la station relais.
